# EUROPEAN PATENT APPLICATION

(11) **EP 4 755 491 A1**
(43) Date of publication of application: **10.06.2026**
(21) Application number: 26153977.9
(22) Date of filing: 07.02.2020
(51) Int. Cl.: B01D 46/00, B01D 46/24, B01D 46/52, B01D 46/02

(54) **FILTER ASSEMBLY AND SYSTEM**

(30) Priority: 08.02.2019 US 201962803097 P
(62) Divisional of application: 24177568.3
(71) Applicant: DONALDSON COMPANY, INC., Bloomington, MN 55431 (US)
(72) Inventor: JOHNSON, Steven A., Minneapolis, MN, 55440 (US); GRAHAM, Stephan A., Minneapolis, MN, 55440 (US)
(74) Representative: PGA S.p.A., Milano, Succursale di Lugano

(57) **Abstract**

The technology disclosed herein relates to, in part, a filter assembly. Filter media is arranged about a central media opening, where the filter media has a first end and a second end. The central media opening extends in an axial direction from the first end towards the second end. An endcap is coupled to the first end of the filter media. The endcap defines an opening in fluid communication with the central media opening, an inner surface abutting and surrounding the endcap opening, and a perimetric sealing surface about the endcap. A first portion of the perimetric sealing surface projects inwardly towards the endcap opening and a second portion of the perimetric sealing surface projects outwardly from the endcap opening. The first portion and the second portion are in axial alignment, and the perimetric sealing surface forms an oblong loop in a first cross-section orthogonal to the axial direction.

## Description

This application claims the benefit of U.S. Provisional Application No. 62/803,097, filed February 8, 2019, which is hereby incorporated by reference in its entirety.

### Technological Field

The present disclosure is generally related to filter systems. More particularly, the present disclosure relates to a filter seal assembly.

### Summary

The technology disclosed herein relates to, in part, a filter assembly. Filter media is arranged about a central media opening, where the filter media has a first end and a second end. The central media opening extends in an axial direction from the first end towards the second end. An endcap is coupled to the first end of the filter media. The endcap defines an opening in fluid communication with the central media opening, an inner surface abutting and surrounding the endcap opening, and a perimetric sealing surface about the endcap. A first portion of the perimetric sealing surface projects inwardly towards the endcap opening and a second portion of the perimetric sealing surface projects outwardly from the endcap opening. The first portion and the second portion are in axial alignment, and the perimetric sealing surface forms an oblong loop in a first cross-section orthogonal to the axial direction.

In some such embodiments, the endcap opening is oblong in the first cross-section. Additionally or alternatively, the central media opening is oblong in a second cross-section orthogonal to the axial direction. Additionally or alternatively, the assembly has an expansion insert defining an outer surface and an insert opening, where the outer surface of the expansion insert is configured to define a compression fit with the inner surface of the endcap. Additionally or alternatively, the expansion insert defines a tertiary flow channel in fluid communication with the central media opening. Additionally or alternatively, the outer surface of the expansion insert defines a recess extending inwardly towards the insert opening and a projection extending outwardly from the insert opening, wherein the recess and projection are in axial alignment and the inner surface defines mating features. Additionally or alternatively, the first cross-section of the perimetric sealing surface defines a first end, a second end, a first elongate side, and a second elongate side, and the first portion and the second portion are defined on the first elongate side.

Additionally or alternatively, the first portion of the perimetric sealing surface abuts the second portion of the perimetric sealing surface. Additionally or alternatively, the endcap defines a plurality of first portions of the perimetric sealing surface and second portions of the perimetric sealing surface. Additionally or alternatively, the first portions and second portions alternate. Additionally or alternatively, the filter media is in a bag configuration. Additionally or alternatively, the filter media is in a pleated configuration.

Some embodiments of the present technology relate to a tubesheet. A substantially planar sheet of material has a length and a width and defines a series of filter openings across the length and width of the sheet of material. Each of the filter openings in the series of filter openings extend through the sheet of material in an axial direction and have an oblong profile orthogonal to the axial direction. The sheet of material defines a projection extending into each of the filter openings and a recess extending out from each of the filter openings, where the projection and recess are axially aligned.

In some such embodiments, each of the filter openings defines a plurality of projections and a plurality of recesses in axial alignment, where the projections alternate with the recesses about a portion of each filter opening. Additionally or alternatively, the plurality of projections and plurality of recesses form undulations extending along a curve. Additionally or alternatively, the sheet of material is a sheet of metal. Additionally or alternatively, a profile of each filter opening defines a first elongate side, a second elongate side, a first end and a second end, and the projection extends out from the filter opening from the first elongate side. Additionally or alternatively, the recess extends into each filter opening on the second elongate side. Additionally or alternatively, the profile of each filter opening is symmetrical. Additionally or alternatively, a first filter opening defined in the tubesheet has a first longitudinal axis and a second filter opening defined in the tubesheet has a second longitudinal axis, and the first longitudinal axis and the second longitudinal axis are 10 degrees to 90 degrees apart.

Some embodiments described herein relate to a filtration system. A tubesheet has a substantially planar sheet of material having a length and a width and defining a filter opening. Filter media has a first end and a second end and defines a central media opening extending in an axial direction from the first end towards the second end. An endcap is coupled to the first end of the filter media. The endcap defines an endcap opening in fluid communication with the central media opening, an inner surface abutting and surrounding the endcap opening, and a perimetric sealing surface about the endcap configured to mate with the tubesheet about the filter opening. A first portion of the perimetric sealing surface projects inwardly towards the endcap opening and a second portion of the perimetric sealing surface projects outwardly from the endcap opening, where the first portion and the second portion are in axial alignment. The filter opening defines a corresponding outward projection configured to receive the second portion of the perimetric sealing surface and a corresponding inward projection configured to receive the first portion of the perimetric sealing surface.

In some such embodiments, the filtration system has an expansion insert defining an outer surface and an insert opening in fluid communication with the central media opening, where the outer surface of the expansion insert is configured to define a compression fit with the inner surface of the endcap. The outer surface of the expansion insert defines a recess extending inwardly towards the insert opening and a projection extending outwardly from the insert opening, where the recess and projection are in axial alignment, and the inner surface defines mating features.

Additionally or alternatively, the perimetric sealing surface defines a first end, a second end, a first elongate side, and a second elongate side, and the first portion and the second portion are defined on the first elongate side. Additionally or alternatively, the first portion of the perimetric sealing surface abuts the second portion of the perimetric sealing surface. Additionally or alternatively, the endcap defines a plurality of first portions of the perimetric sealing surface and second portions of the perimetric sealing surface. Additionally or alternatively, the first portions and second portions alternate.

Additionally or alternatively, the perimetric sealing surface forms an oblong loop in a first cross-section orthogonal to the axial direction. Additionally or alternatively, the endcap opening is oblong in a first cross-section. Additionally or alternatively, the central media opening is oblong in a second cross-section orthogonal to the axial direction. Additionally or alternatively, the expansion insert defines a tertiary flow channel in fluid communication with the central media opening. Additionally or alternatively, the filter opening extends through the tubesheet in the axial direction and the filter opening is oblong in a second cross-section orthogonal to the axial direction.

Additionally or alternatively, the tubesheet defines a projection extending into the filter opening and a recess extending out from the filter opening, wherein the projection and recess are axially aligned. Additionally or alternatively, the tubesheet defines a plurality of projections and a plurality of recesses in axial alignment, wherein the projections alternate with the recesses about each filter opening. Additionally or alternatively, the plurality of projections and plurality of recesses form undulations extending along a curve. Additionally or alternatively, the sheet of material defines a series of filter openings across the length and width of the sheet of material. Additionally or alternatively, each of the filter openings in the series of filter openings have an oblong profile orthogonal to the axial direction. Additionally or alternatively, the profile of each filter opening is symmetrical.

In some embodiments, the present technology relates to a filter assembly. Filter media is arranged about a central media opening. The filter media has a first end and a second end and the central media opening extends in an axial direction from the first end towards the second end. An endcap is coupled to the first end of the filter media. The endcap defines an endcap opening in fluid communication with the central media opening, an inner surface abutting and surrounding the endcap opening, and a perimetric sealing surface about the endcap. An expansion insert defines an outer surface and an insert opening, where the outer surface of the expansion insert is configured to define a compression fit with the inner surface of the endcap. The outer surface of the expansion insert defines a recess extending inwardly towards the insert opening and a projection extending outwardly from the insert opening, where the recess and projection are in axial alignment and the inner surface defines mating features.

In some such embodiments, a first portion of the perimetric sealing surface projects inwardly towards the endcap opening and a second portion of the perimetric sealing surface projects outwardly from the endcap opening, where the first portion and the second portion are in axial alignment. Additionally or alternatively, the first portion of the perimetric sealing surface abuts the second portion of the perimetric sealing surface. Additionally or alternatively, the endcap defines a plurality of first portions of the perimetric sealing surface and second portions of the perimetric sealing surface. Additionally or alternatively, the perimetric sealing surface forms an oblong loop in a first cross-section orthogonal to the axial direction. Additionally or alternatively, the expansion insert defines a tertiary flow channel in fluid communication with the central media opening. Additionally or alternatively, the first cross-section of the perimetric sealing surface defines a first end, a second end, a first elongate side, and a second elongate side, and the first portion and the second portion are defined on the first elongate side.

The above summary is not intended to describe each embodiment or every implementation. Rather, a more complete understanding of illustrative embodiments will become apparent and appreciated by reference to the following Detailed Description of Exemplary Embodiments and claims in view of the accompanying figures of the drawing.

### Brief Description of the Drawings

The present technology may be more completely understood and appreciated in consideration of the following detailed description of various embodiments in connection with the accompanying drawings.
FIG. 1 is a perspective view of an example filter assembly consistent with some embodiments of the current technology.
FIG. 2 is a second perspective view of an example filter assembly consistent with FIG. 1.
FIG. 3 is Detail View of FIG. 1.
FIG. 4 is a Detail View of FIG. 2.
FIG. 5 is cross-sectional view of FIG. 3.
FIG. 6 is a cross-sectional view of another example embodiment.
FIG. 7 is a cross-sectional view of yet another example embodiment.
FIG. 8 is cross-sectional view of an example embodiment consistent with FIG. 3.
FIG. 9 is an alternate cross-sectional view of another example embodiment consistent with FIG. 3.
FIG. 10 is a facing view of a portion of an example system.
FIG. 11 an exploded perspective view of a portion of an example system consistent with some embodiments.
FIG. 12 is a perspective exploded view of a portion of another example system consistent with some embodiments.
FIG. 13 is a side view an example system consistent with FIG. 12.

The figures are rendered primarily for clarity and, as a result, are not necessarily drawn to scale. Moreover, various structure/components, including but not limited to fasteners, electrical components (wiring, cables, etc.), and the like, may be shown diagrammatically or removed from some or all of the views to better illustrate aspects of the depicted embodiments, or where inclusion of such structure/components is not necessary to an understanding of the various exemplary embodiments described herein. The lack of illustration/description of such structure/components in a particular figure is, however, not to be interpreted as limiting the scope of the various embodiments in any way.

### Detailed Description

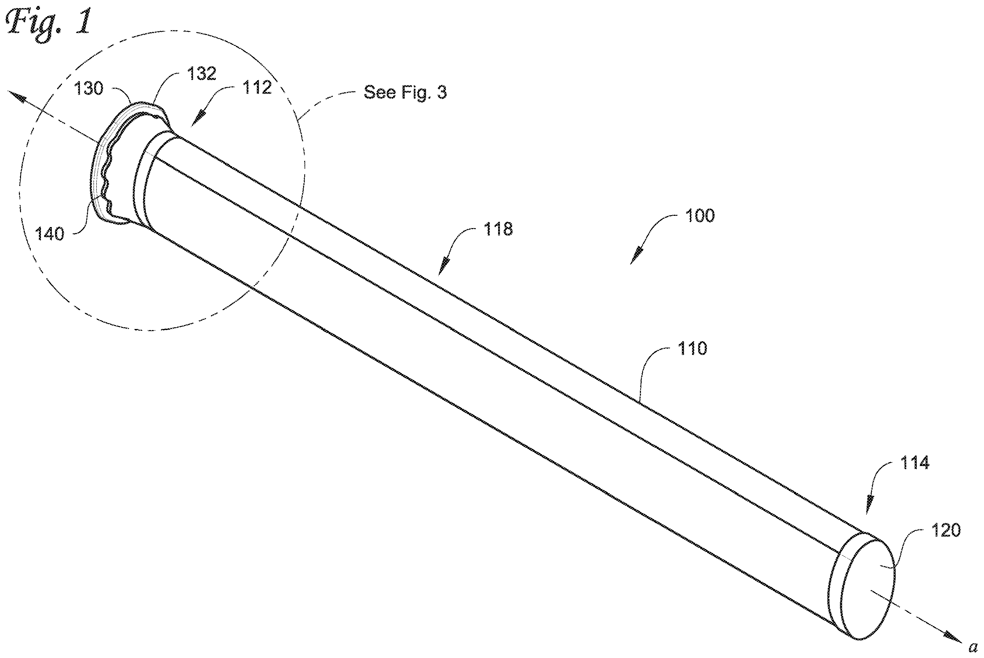

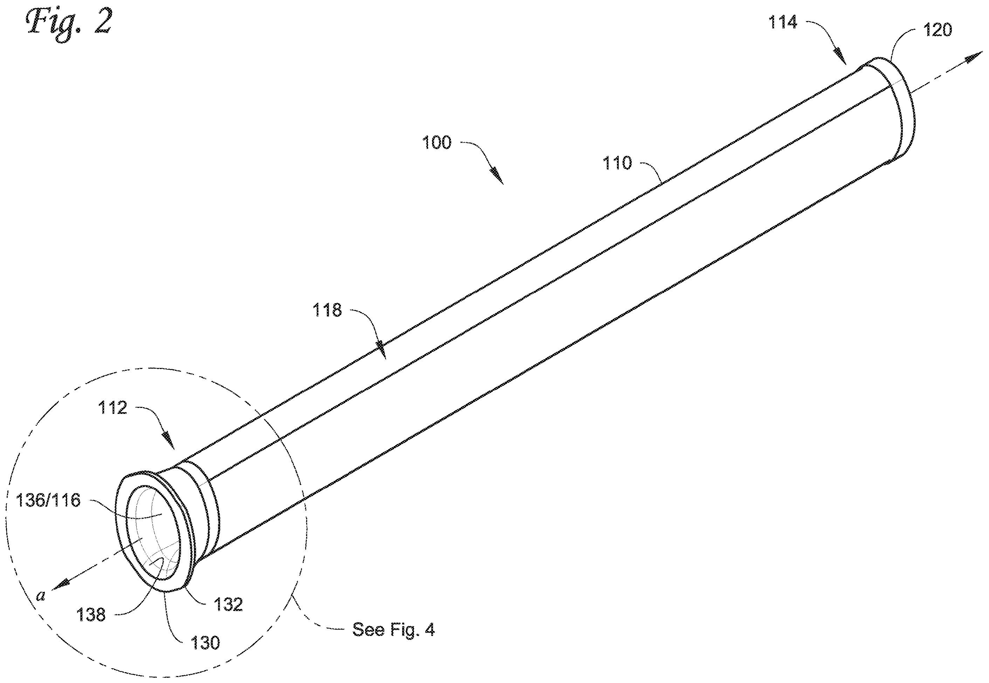

FIG. 1 is a perspective view of an example filter assembly 100 consistent with some embodiments of the current technology, and FIG. 2 depicts a second perspective of the example filter assembly 100. The filter assembly 100 has filter media 110 having a first end 112 and a second end 114. An endcap 130 is coupled to the first end 112 of the filter media. The endcap 130 defines an endcap opening 136 in communication with the central media opening 116.

The filter media 110 is generally configured to filter a fluid such as, for example a gaseous fluid, but in some other embodiments the filter media 110 is configured to filter a liquid. The filter media 110 is generally arranged about a central media opening 116. The filter media 110 and the central media opening 116 extends in an axial direction *a* from the first end 112 of the filter media 110 towards the second end 114 of the filter media 110.

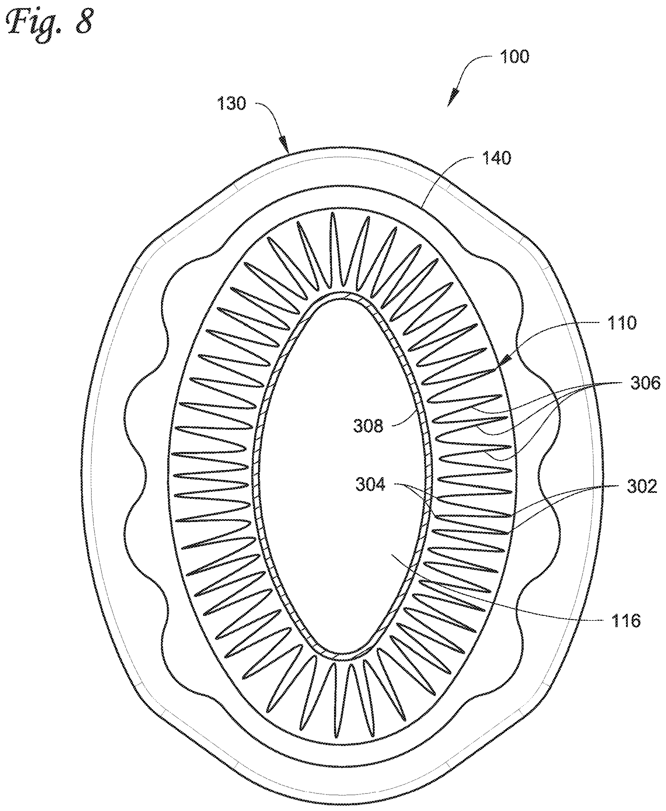

The filter media 110 can be constructed of a variety of types of materials and combinations of materials. In some embodiments the filter media 110 is in a pleated configuration (which is described in more detail with reference to FIG. 8, below). In some embodiments the filter media 110 is in a bag configuration that is one or more layers of filter media defining an open end at the first end 112, a closed end towards the second end 114, and the central media opening 116. Other types of filter media 110 can also be used.

A closure 120 can be defined towards the second end 114 of the filter media 110. The closure 120 is generally configured to obstruct the central media opening 116 at the second end 114 of the filter media 110. Particularly, the closure 120 helps define a fluid flow pathway extending between the outside the filter assembly 100 and the central media opening 116 through the filter media 110. The closure 120 can be a second endcap coupled to the second end 114 of the filter media 110 in some embodiments, such as embodiments where the filter media 110 is in a pleated configuration. In other embodiments, the closure 120 can be a portion of the filter media 110 itself, such as where the filter media 110 is in a bag configuration.

In some embodiments the central media opening 116 defines a downstream side of the filter assembly 100 and an outer surface 118 of the filter media 110 defines an upstream side of the filter assembly 100. In some other embodiments the central media opening 116 defines an upstream side of the filter assembly 100 and an outer surface 118 of the filter media 110 defines a downstream side of the filter assembly 100.

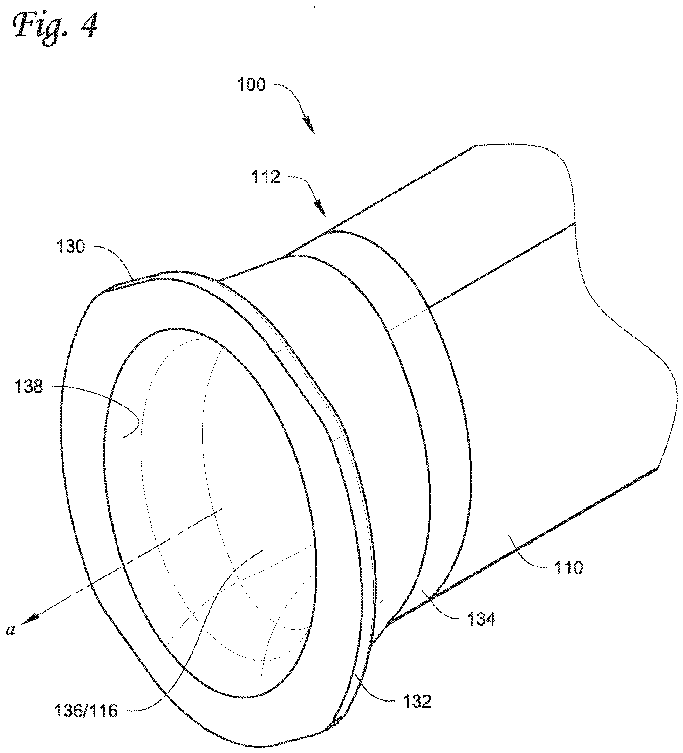

The filter assembly 100 is generally configured to be installed in a filtration system. And, in particular, the endcap 130 is generally configured to form a seal with system components and the filter media 110 such that filtrate is isolated from the unfiltered fluid, which will be described in more detail, below. The endcap 130 defines a filter media receptacle 134 that is configured to receive the first end 112 of the filter media 110. The endcap opening 136 is in fluid communication with the central media opening 116 such that fluid can pass there-through. The endcap 130 defines an inner surface 138 abutting and surrounding the endcap opening 136, particularly visible in FIG. 4, which is Detail View of FIG. 2.

The endcap 130 also defines a perimetric sealing surface 140 about the endcap 130, particularly visible in FIG. 4, which is Detail View of FIG. 1. The perimetric sealing surface 140 is configured to be sealably received by components of a filtration system, such as a tube sheet opening, which will be described in more detail below. The perimetric sealing surface 140 has a depth *d* in the axial direction. The depth *d* can be sized to accommodate system components that are configured to form a seal with the perimetric sealing surface 140. In some embodiments, the depth d can range from 3mm to 30mm, 4mm to 15mm, or 5mm to 10 mm. In one example embodiments the depth d is about 6mm. The perimetric sealing surface 140 has a length that extends around the endcap opening 136. A first portion 142 of the perimetric sealing surface 140 projects inwardly towards the endcap opening 136 and therefore forms a recess. A second portion 144 of the perimetric sealing surface 140 projects outwardly from the endcap opening 136 and therefore forms a projection. The first portion 142 and the second portion 144 are in axial alignment.

An endcap rim 132 extends outwardly from the perimetric sealing surface 140. In some embodiments the endcap rim 132 abuts the perimetric sealing surface 140 about the length of the perimetric sealing surface 140 around the endcap 130. The endcap rim 132 can also be configured to form a seal with system components, in some embodiments. For example, the endcap rim 132 can define a seal support surface 133 abutting the perimetric sealing surface 140. The seal support surface 133 is planar in some embodiments. The seal support surface 133 can be orthogonal to the perimetric sealing surface 140.

The endcap 130 can be constructed of various different types of materials and combinations of materials. In some embodiments, the endcap 130 is constructed of urethane. In some embodiments, the endcap 130 is constructed of a cast aluminum with a gasket material disposed across one or more surfaces, such as about the perimetric sealing surface 140 and at least a portion of the seal support surface 133 about the perimetric sealing surface 140. In some embodiments, the endcap 130 is at least partially constructed of a material having a durometer between about 30 Shore A to 70 Shore A.

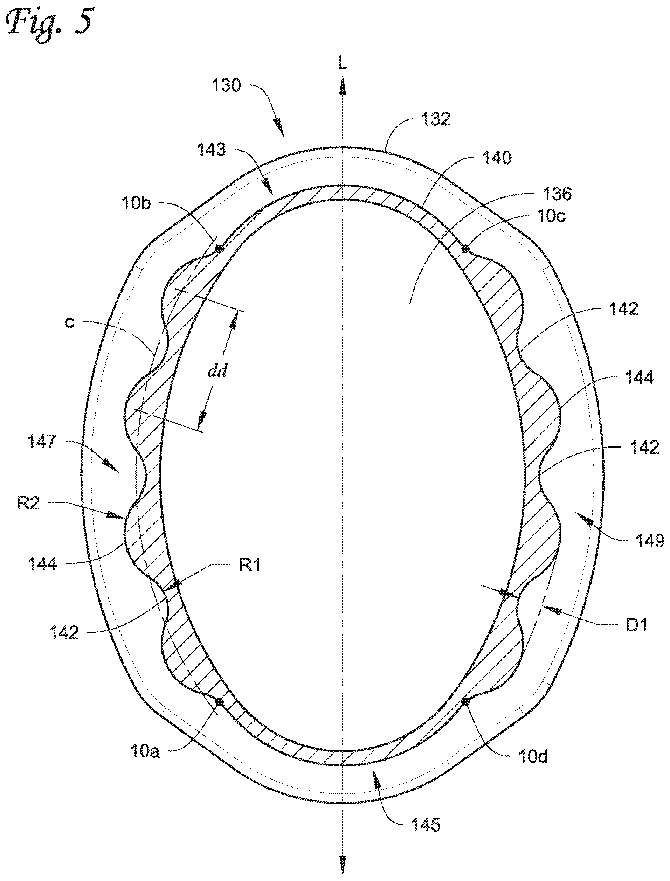

FIG. 5 depicts a cross-sectional view of the endcap 130 in a plane orthogonal to the axial direction *a*. In this view, the perimetric sealing surface 140 is a line forming a loop around the endcap opening 136. The loop formed by the perimetric sealing surface 140 is oblong in a direction parallel to a longitudinal axis L. Similarly, the endcap opening 136 is also oblong in the longitudinal direction L.

The profiles of the first portion 142 and second portion 144 of the perimetric sealing surface 140 are particularly visible in the current view. Furthermore, it can be seen that the endcap 130 defines a plurality of first portions 142 of the perimetric sealing surface 140 and second portions 144 of the perimetric sealing surface 140. At least one first portion 142 abuts at least one second portion 144 of the perimetric sealing surface 140. Indeed, a plurality of first portions 142 alternate with a plurality of second portions 144. The plurality of first portions 142 and second portions 144 cumulatively form undulations extending along a curve c.

The cross-section of the perimetric sealing surface 140 defines a first end 143, a second end 145, a first elongate side 147, and a second elongate side 149. A first portion 142 and a second portion 144 are defined on the first elongate side 147. A first portion 142 and a second portion 144 are also defined on the second elongate side 149.

In the current embodiment, the perimetric sealing surface 140 is symmetrical relative to the longitudinal axis L, but in some embodiments the perimetric sealing surface 140 is not symmetrical. Furthermore, while each of the first portions 142 and second portions 144 of the perimetric sealing surface 140 have a repeating, regular profile shape, in some embodiments the profile shapes of the first portions 142 and second portions 144 are not regular and/or repeating. Also, at least one first portion 142 can have a different profile shape than another first portion 142. Similarly, at least one second portion 144 can have a different profile shape than another second portion 144.

The perimetric sealing surface 140 can have a structure incorporating projections and recesses that have geometries, measurements, and ratios consistent with sealing surfaces disclosed in PCT Application No. PCT/US2018/045819, titled "Filter Cartridges: Air Cleaner Assemblies; Housings; Features; Components; and, Methods," filed on August 8, 2018, which is incorporated by reference herein.

The total length of the perimetric sealing surface 140 can be referred to as P1, and the total length of the portions of the perimetric sealing surface 140 defined by projections and recesses can be referred to as P2, where the "total length" in this context refers to the seal surface distance including contours. In the current figure, P2 is the length of the perimetric sealing surface 140 between end points 10a and 10b of a first section defining projections abutting recesses added to the length of the perimetric sealing surface 140 between end points 10c and 10d of a second section defining projections abutting recesses, for example. The ratio of P1 to P2 is generally greater than 1.0, but in some embodiments, the ratio of P1 to P2 is about equal to 1.0. In some embodiments, the ratio of P1 to P2 is between 1.1 and 3.0. In some embodiments the ratio of P1 to P2 is between 1.2 and 1.7. In one example, the ratio of P1 to P2 is about equal to 1.5.

The sizes of the projections and recesses can be characterized in a variety of ways, such as by the depth D1 between a particular projection and an adjacent recess. Typically, the projection/recess depth D1 is no greater than 70 mm, often no greater than 50 mm, and usually no greater than 30 mm. Typically the projection/recess depth D1 is at least 5 mm, at least 10 mm, and sometimes at least 15 mm. The projection/recess depth D1 can be from 5-15 mm in some embodiments, such as 6mm or 9mm. Alternatives are possible.

In some embodiments, the recess of the first portion 142 defines a radius R1. The radius of the first portion R1 can range from 4mm to 40mm. In some embodiments the radius of the first portion R1 can be about 4mm, 6mm, 12mm, 16mm, 24mm, 33mm, or 39mm. In some embodiments, the projection of the second portion 144 defines a radius R2. The radius of the second portion R2 can range from 4mm to 40mm. In some embodiments, the radius of the second portion R2 can be about 4mm, 5mm, 6mm, 11mm, 16mm, 17mm, 19mm, or 26mm. Furthermore, the distance between adjacent first portions or adjacent second portions, such as distance *dd* in FIG. 5 is generally greater than 10mm. In some embodiments distance *dd* can range from 15-70mm, 30-50mm or 35-45mm. In an example, the distance *dd* can be about 42mm. It is noted that, where there are multiple first portions and second portions of the perimetric sealing surface 140, each first portion (or second portion) does not necessarily have the same depth, radius, and/or geometry, and distances between adjacent first portions and adjacent second portions can vary.

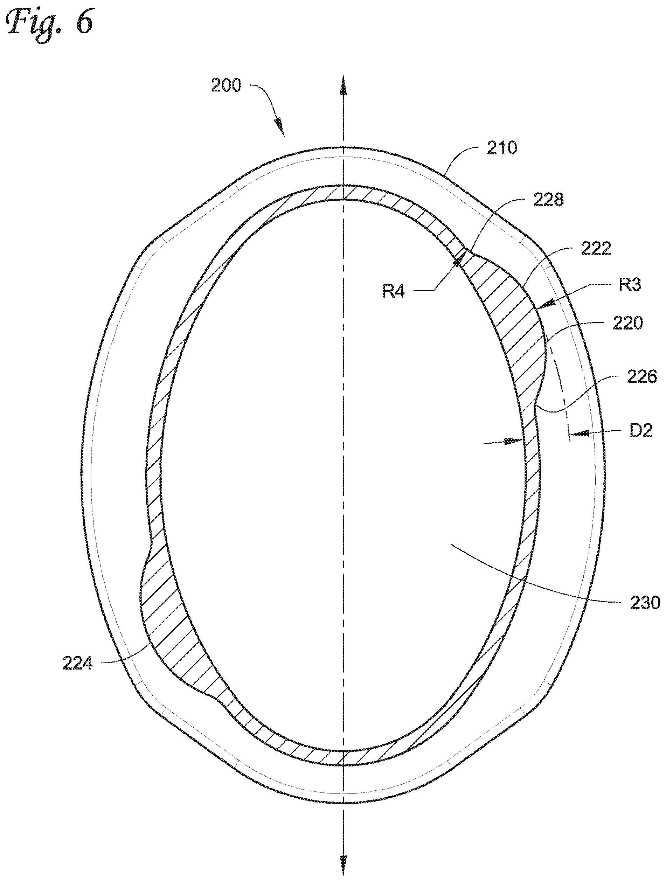

FIG. 6 depicts a cross-sectional view through another example endcap 200 of a filter assembly. The filter assembly can be consistent with other filter assemblies discussed herein, except where contradictory. As with the cross-section depicted in FIG. 5, here the cross-section is in a plane orthogonal to an axial direction of the filter assembly. The endcap 200 defines an endcap opening 230 and a perimetric sealing surface 220 about the endcap 200. The perimetric sealing surface 220 also extends around the endcap opening 230. The endcap 200 also has an endcap rim 210 extending outwardly from the perimetric sealing surface 220.

The perimetric sealing surface 220 has a first projection 222 and a second projection 224 extending outward from the endcap 200 and the endcap opening 230. In this example the profile of the perimetric sealing surface 220 is not symmetrical (unlike the example depicted in FIG. 5). A first recess 226 and a second recess 228 abut each side of the first projection 222, by virtue of the protruding shape of the first projection 222. The ratio of the total length of the perimetric sealing surface 220 to the total length of the perimetric sealing surface 220 defined by projections and recesses can be similar to that described above with reference to FIG. 5.

A projection/recess depth D2 can be defined between the first projection 222 and an adjacent recess (such as the first recess 226). The projection/recess depth can be similar to that described above with reference to FIG. 5. The first projection 222 can define a radius R3. The radius of the first projection R3 can be similar to the radius of the first portion R1 described above with reference to FIG. 5. The second projection 224 can define a radius that is similar or different to the radius of the first projection R3. The second recess 228 can define a radius R4. The radius R4 of the second recess 228 can be similar to the radius of the second portion R2 described above with reference to FIG. 5. The first recess 226 can define a similar or different radius than the second recess 228.

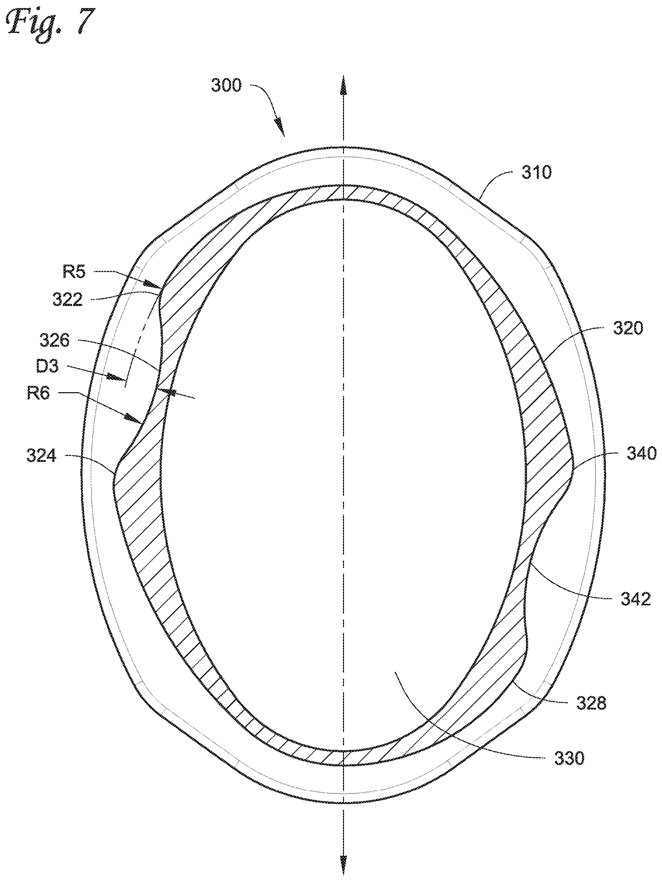

FIG. 7 depicts a cross-sectional view through another example endcap 300 of a filter assembly. The filter assembly can be consistent with other filter assemblies discussed herein, except where contradictory. As with the cross-section depicted in FIG. 5, here the cross-section is in a plane orthogonal to an axial direction of the filter assembly. The endcap 300 defines an endcap opening 330 and a perimetric sealing surface 320 about the endcap 300. The perimetric sealing surface 320 also extends around the endcap opening 330. The endcap 300 also has an endcap rim 310 extending outwardly from the perimetric sealing surface 320.

The perimetric sealing surface 320 has a first projection 322 and a second projection 324 extending outward from the endcap 300. The first projection 322 can be characterized as such by virtue of an abutting first recess 326 defined by the perimetric sealing surface 320. The second projection 324 is formed similarly. The perimetric sealing surface 320 also has a third projection 328 and a fourth projection 340 abutting a second recess 342.

The ratio of the total length of the perimetric sealing surface 320 to the total length of the perimetric sealing surface 320 defined by projections and recesses can be similar to that described above with reference to FIG. 5. A projection/recess depth D3 can be defined between the first projection 322 and the first recess 326 (which is an adjacent recess). The projection/recess depth D3 can be similar to that described above with reference to FIG. 5. The first projection 322 can define a radius R5. The radius of the first projection R5 can be similar to the radius of the first portion R1 described above with reference to FIG. 5. The second projection 324 can define a radius that is similar or different to the radius of the first projection R5. The first recess 326 can define a radius R6. The radius R6 of the first recess 326 can be similar to the radius of the second portion R2 described above with reference to FIG. 5. The first recess 326 can define a similar or different radius than the second recess 342, and the third and fourth projections 328, 340 can each define a similar or different radius than the first projection 322.

While the profiles of the example perimetric sealing surfaces of FIGS. 5-7 have projections and recesses defining radii, in some other embodiments one or more of the projections and/or recesses have straight segments that do not define a curvature. In such embodiments, the profiles of the perimetric sealing surfaces can define corners joining a straight segment to another straight segment or a straight segment to a curved segment.

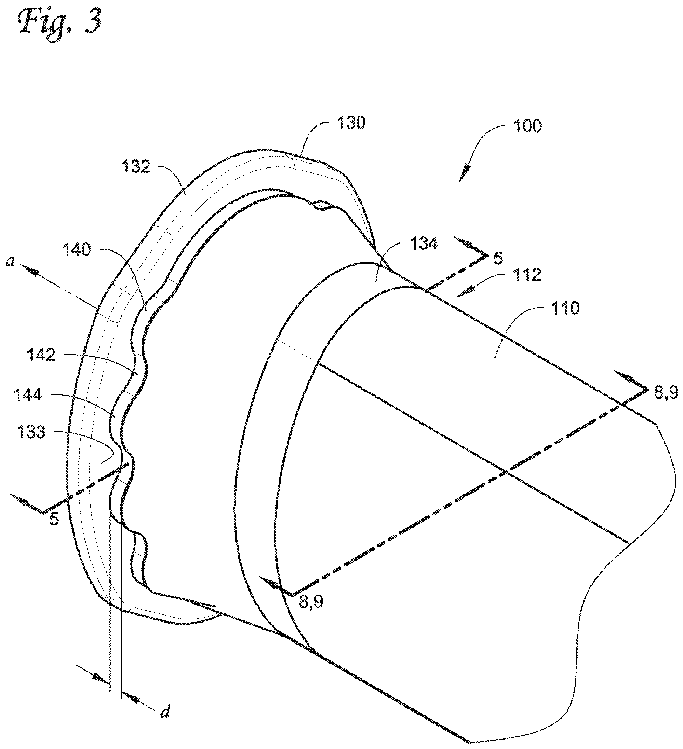

FIG. 8 is an example of a second cross-sectional view of a filter assembly 100 consistent with FIGS. 1-5. The cross-section is orthogonal to the axial direction and through the filter media 110 of FIG. 3. In the current example, the filter media 110 is pleated filter media. The pleated filter media has a plurality of pleats 306 extending in the axial direction. A first set of pleat folds 302 approximates an outer perimeter of the filter media 110 and a second set of pleat folds 304 defines the central media opening 116. In the current embodiment, a liner 308 is disposed within the pleated filter media 110 and mutually defines the central media opening 116. In some embodiments, a liner 308 can be omitted. The central media opening 116 is oblong and has a generally ovular shape.

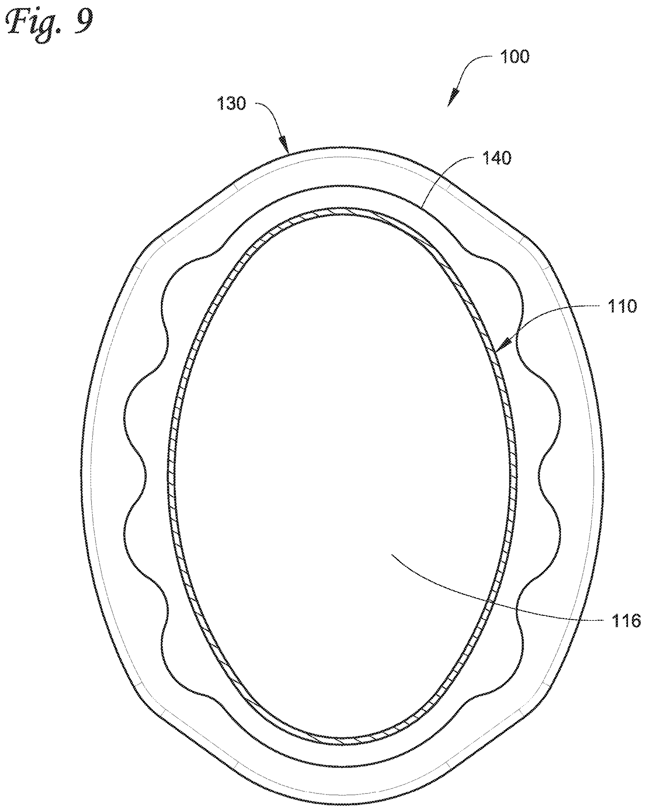

FIG. 9 is another example of a second cross-sectional view of a filter assembly 100 consistent with FIGS. 1-5. The cross-section is orthogonal to the axial direction and through the filter media 110 of FIG. 3. In the current example, the filter media 110 is in a bag configuration, and similarly defines a central media opening 116 that is oblong. Unlike the example of FIG. 8, here the filter media does not have a pleated structure.

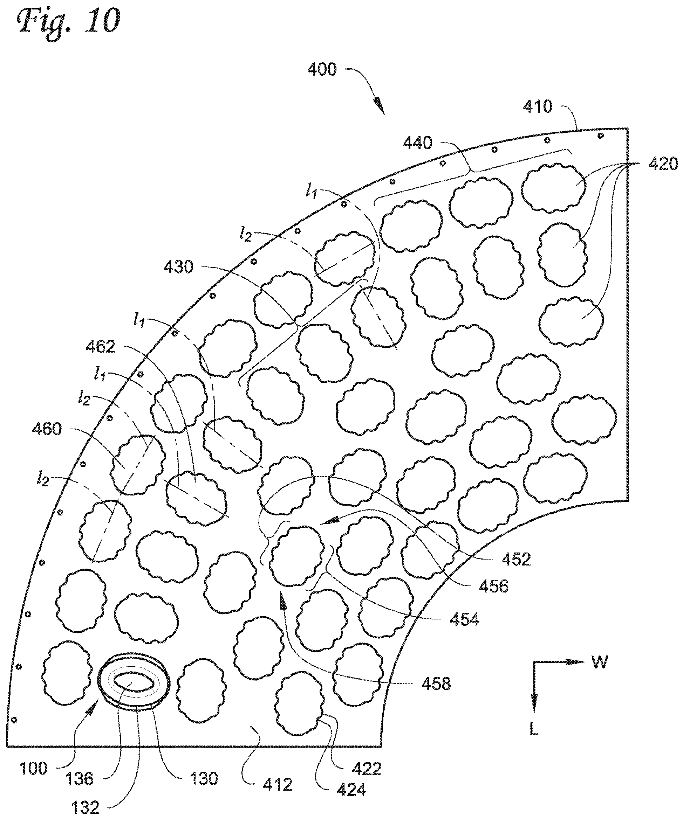

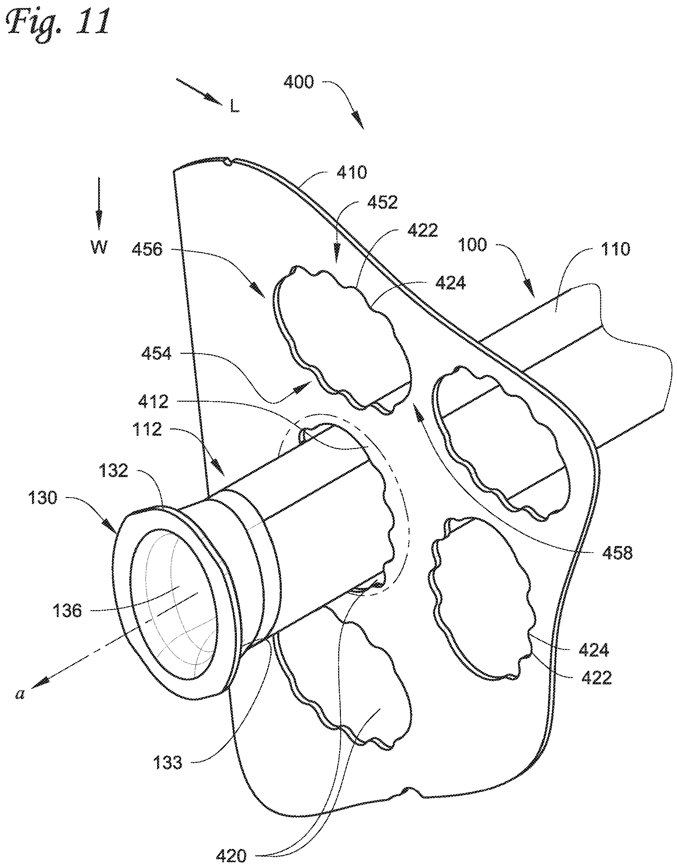

FIG. 10 is a facing view of a portion of an example system consistent with some embodiments, and FIG. 11 is an exploded perspective view of a portion of such a system. The system 400 has a tubesheet 410 defining a filter opening 420 and a filter assembly 100 that is configured to mate with the tubesheet 410 about the filter opening 420.

The filter assembly 100 can be consistent with filter assemblies described elsewhere herein, in that the filter assembly 100 has filter media 110 extending in an axial direction *a* and an endcap 130 coupled to a first end 112 of the filter media 110. The endcap 130 defines an endcap opening 136 in communication with a central media opening of the filter media 110, and the endcap 130 has an endcap rim 132 extending outward from the endcap opening 136. While not visible in the currently-described figures, the filter assembly 100 has a perimetric sealing surface 140 having a profile consistent with that depicted in FIG 5.

The tubesheet 410 is generally configured to receive one or more filter assemblies. The tubesheet 410 generally is a substantially planar sheet of material having a length in a length direction *L* and a width in a width direction *W.* The tubesheet 410 be constructed of a variety of materials and combinations of materials, and in one example the tubesheet 410 is constructed of metal. In another example the tubesheet 410 is constructed of fiberglass. The length *L* and the width *W* are generally in a plane orthogonal to the axial direction *a* of the filter assembly 100. The sheet of material defines a series of filter openings 420 across the length *L* and width *W* of the sheet of material. Each of the filter openings 420 in the series of filter openings extend through the sheet of material in the axial direction *a*.

Each of the filter openings 420 can have an oblong profile orthogonal to the axial direction *a*, which is particularly visible in FIG. 10. As such, each of the filter openings 420 can have a longitudinal axis *l*. To accommodate the desired number of filter openings 420 on the tubesheet 410, some of the filter openings 420 can be aligned differently than other filter openings 420 on the tubesheet. In some embodiments, a first plurality of the filter openings 430 are defined in the tubesheet 410 such that each of their corresponding longitudinal axis *l*₁ are arranged radially across the tubesheet 410. In some embodiments, a second plurality of the filter openings 440 are defined radially across the tubesheet 410 such that each of their corresponding longitudinal axis *l*₂ are arranged tangential to the radial direction across the tubesheet 410. In some embodiments a first filter opening 460 defined by the tubesheet 410 has a first longitudinal axis *l*₁, a second filter opening 462 defined by the tubesheet 410 has a second longitudinal axis *l*₂, and the first longitudinal axis *l*₁ and the second longitudinal axis *l*₂ are between 10 and 90 degrees apart.

The filter opening defines a projection 422 extending outward from each of the filter openings 420 and a recess 424 extending into each of the filter openings 420. The projection 422 and recess 424 are axially aligned.

In various embodiments, the endcap 130 of the filter assembly 100 is generally configured to mate with the tubesheet 410 about the filter opening 420. In particular, the perimetric sealing surface 140 (see FIG. 3) of the endcap 130 is configured to form a seal with the tubesheet 410. In some embodiments, the tubesheet 410 forms a compression fit with the perimetric sealing surface 140. As can be seen by comparing the cross-sectional view of the perimetric sealing surface of FIG. 5 and the profile of the filter opening of FIG. 10, the filter opening 420 is configured to accommodate the perimetric sealing surface 140. As described with respect to FIG. 5, the perimetric sealing surface defines at least a first portion 142 that projects inwardly towards the endcap opening 136 and a second portion 144 that projects outwardly from the endcap opening 136. The filter opening 420 that is configured to receive the filter assembly 100 defines a corresponding outward projection 422 configured to receive the second portion 144 of the perimetric sealing surface 140 and a corresponding recess 424 configured to receive the first portion 142 of the perimetric sealing surface 140.

In the current example, each of the filter openings 420 defines a plurality of projections 422 and a plurality of recesses 424 in axial alignment. Here, projections 422 alternate with recesses 424 about a portion of each filter opening 420. The profile of each filter opening 420 defines a first elongate side 452, a second elongate side 454, a first end 456 and a second end 458. A projection 422 extends out from filter opening 420 on the first elongate side 452. In this particular example, each elongate side 452, 454 of the filter opening 420 has a plurality of projections 422 and plurality of recesses 424 that cumulatively form undulations extending along a curve. The recess 424 extends into each filter opening on the second elongate side 454. Similar to the profile of the perimetric sealing surface discussed above with reference to FIG. 5, here the profile of each filter opening 420 is symmetrical.

The configuration of the filter opening 420 and the perimetric sealing surface of the filter endcap 130 consistent with the technology disclosed herein can have a variety of advantages. For example, the filter opening 420 configuration can be a safety feature that ensures a user cannot install an unsuitable filter assembly into a filter opening 420. As another example, fluid flow during system operation can exert forces on the filter assembly 100 that can shift the filter assembly 100 relative to the tubesheet 410 to eliminate the seal between the filter assembly 100 and the tubesheet 410. The structure of the interface mutually defined by the perimetric sealing surface 140 (FIG. 5) and the tubesheet 410 can improve the structural rigidity between the endcap 130 and the tubesheet 410 to reduce the likelihood of the filter assembly 100 dislodging from the tubesheet 410 during system operation. Such improved structural rigidity can also prevent fluid bypassing the filter assembly 100 by leaking through a portion of the seal area between the filter assembly 100 (specifically the endcap 130) and the tubesheet 410.

In some embodiments a seal support surface 133 (FIG. 3) defined by the endcap rim 132 is configured to abut a main surface 412 (FIG. 11) of the tubesheet 410 about the filter opening 420. In some, but not all such embodiments, the seal support surface 133 and the main surface 412 are configured to form a seal.

It is noted that the perimetric sealing surface of the endcap and the tubesheet are generally configured to mate to form a fluidic seal between the endcap and the tubesheet. As such, in embodiments where the loop defined by the perimetric sealing surface has a profile shape that deviates from the shape depicted in FIG. 5 (such as FIG. 6 and FIG. 7), the filter openings defined by the tubesheet will have a corresponding profile shape such that the tubesheet can mate with the perimetric sealing surface and seal support surface of the endcap. The fluidic seal between the endcap and the tubesheet provides system separation between the upstream, pre-filtered fluid and the filtrate.

In some example implementations of the technology disclosed herein, the tubesheet is oriented generally parallel to a horizontal plane in space, and the filter assemblies installed in the tubesheet have an axial direction that is generally vertical. However, some other implementations can have alternate orientations.

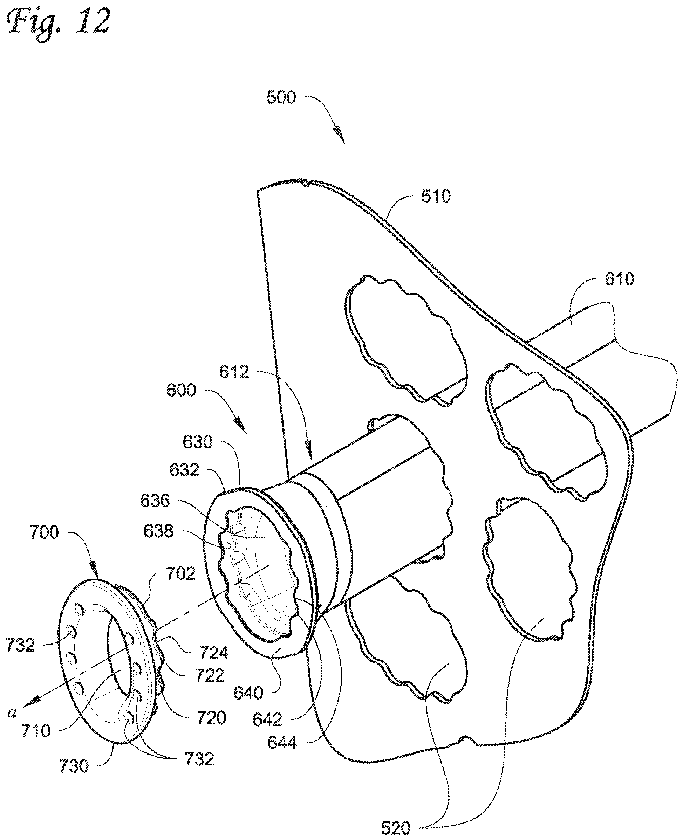

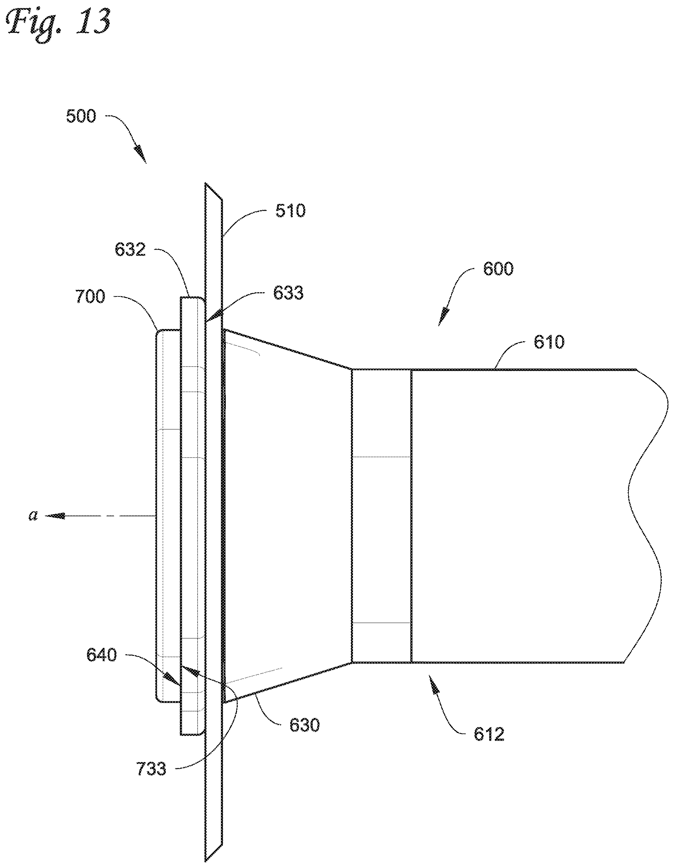

FIG. 12 a perspective exploded view of a portion of an alternative example system 500 consistent with some embodiments, and FIG. 13 is a side view of such an example system 500. The example system 500 has a tubesheet 510 and a filter assembly 600, where the filter assembly 600 has filter media 610, an endcap 630 and an expansion insert 700.

Similar to the examples discussed above, filter assembly 600 has filter media 610 coupled to an endcap 630 at a first end of the filter media 610. The tubesheet 510 defines a plurality of filter openings 520 that are configured to mate with filter endcaps 630. The filter media 610, the endcap 630 and the tubesheet 510 can be consistent with examples discussed above and can incorporate modifications as discussed above. For example, while the filter openings 520 of the tubesheet 510 demonstrate a particular configuration discussed above with respect to FIG. 11, the filter openings 520 can have alternate configurations.

Unlike previous examples, the current example system 500 incorporates the expansion insert 700 that is configured to form a compression fit with an inner surface 638 of the endcap 630, where the inner surface 638 of the endcap 630 abuts and surrounds the endcap opening 636. In some embodiments, the expansion insert 700 is configured to exert an expansion force on the endcap 630 via the endcap opening 636. In some embodiments, the expansion insert 700 and the tubesheet 510 can be configured to exert a compressive force on the endcap 630. Such a compressive force can help secure the filter assembly 600 to the tubesheet 510.

The expansion insert 700 has an insertion portion 702 that is configured to be inserted into the endcap opening 636. The insertion portion 702 defines an outer surface 720 and an insert opening 710. The outer surface 720 is configured to define the compression fit with the inner surface 638 of the endcap 630. The insert opening 710 is configured to be in fluid communication with the endcap opening 636 (which is in fluid communication with a central media opening defined by the filter media 610). The expansion insert 700 has a flange 730 extending around the insert opening 710. The flange 730 defines a flange surface 733 (FIG. 13) that is configured to abut a facing surface 640 of the endcap 630 rim 632. In some embodiments the flange surface 733 is substantially planar.

The interface between the outer surface 720 of the expansion insert 700 and the inner surface 638 of the endcap 630 can have similar geometries, measurements, and configurations to the interface between the tubesheet and the perimetric sealing surface of the endcap, discussed above. In particular, the outer surface 720 of the expansion insert 700 defines a recess 724 extending inwardly towards the insert opening 710 and a projection 722 extending outwardly from the insert opening 710. The recess 724 and projection 722 are in axial alignment.

The inner surface 638 of the endcap 630 defines mating features that are configured to mate with the outer surface 720. In particular, the inner surface 638 of the endcap 630 defines a mating projection 644 extending into the endcap opening 636. The mating projection 644 is configured to be received by the outer surface 720 recess 724 of the expansion insert 700. The inner surface 638 of the endcap 630 defines a mating recess 642 extending out from the endcap opening 636, where the mating recess 642 is configured to receive the projection 722 of the outer surface 720 of the expansion insert 700.

In various embodiments, the outer surface 720 of the insertion portion 702 of the expansion insert 700 can define a plurality of recesses 724 and projections 722. In some embodiments, the recesses 724 and projections 722 can alternate along a portion of the length of the outer surface 720. In some embodiments, the recesses 724 and projections 722 can define an undulating seal surface. In such embodiments the inner surface 638 of the endcap 630 defines corresponding mating features to receive the insertion portion 702 of the expansion insert 700.

In examples consistent with the current example, the expansion insert 700 defines a tertiary flow channel 732 in fluid communication with the central media opening. The tertiary flow channel 732 can be used to facilitate airflow in systems where the filter media 610 is cleaned by pulsing pressurized air into the filter media opening through the endcap opening 636 (and, therefore, the insert opening 710).

In various embodiments, the expansion insert 700 defines a plurality of tertiary flow channels 732. The tertiary flow channel(s) 732 can be in fluid communication with the endcap opening 636. The tertiary flow channel(s) 732 can extend in the axial direction *a*. In some embodiments, the tertiary flow channel(s) 732 are parallel to the insert opening 710. The tertiary flow channel(s) 732 can extend through the flange 730 and the insertion portion 702 of the expansion insert 700. The tertiary flow channel(s) 732 can extend through the portions of the outer surface 720 of the insertion portion 702 that define projections 722.

It is noted that, while in the current embodiment the outer surface 720 of the insertion portion 702 defines recesses and projections, in some other embodiments the outer surface of the insertion portion (and, therefore the inner surface of the endcap) does not define recesses and projections. Furthermore, while in the current embodiment the filter openings 520 in the tubesheet 510 define recesses and projections (corresponding to recesses and projections of the perimetric sealing surface of the endcap), in some other embodiments the filter openings 520 and the perimetric sealing surface do not define recesses and projections.

### Restatement of the Embodiments

Embodiment 1. A filter assembly comprising:
filter media arranged about a central media opening, the filter media having a first end and a second end and the central media opening extends in an axial direction from the first end towards the second end; and
an endcap coupled to the first end of the filter media, the endcap defining: an opening in fluid communication with the central media opening,
an inner surface abutting and surrounding the endcap opening, and
a perimetric sealing surface about the endcap, wherein a first portion of the perimetric sealing surface projects inwardly towards the endcap opening and a second portion of the perimetric sealing surface projects outwardly from the endcap opening, wherein the first portion and the second portion are in axial alignment, and wherein the perimetric sealing surface forms an oblong loop in a first cross-section orthogonal to the axial direction.

Embodiment 2. The filter assembly of any one of embodiments 1 and 3-12, wherein the endcap opening is oblong in the first cross-section.

Embodiment 3. The filter assembly of any one of embodiments 1-2 and 4-12, wherein the central media opening is oblong in a second cross-section orthogonal to the axial direction.

Embodiment 4. The filter assembly of any one of embodiments 1-3 and 5-12, further comprising an expansion insert defining an outer surface and an insert opening, wherein the outer surface of the expansion insert is configured to define a compression fit with the inner surface of the endcap.

Embodiment 5. The filter assembly of any one of embodiments 1-4 and 6-12, wherein the expansion insert defines a tertiary flow channel in fluid communication with the central media opening.

Embodiment 6. The filter assembly of any one of embodiments 1-5 and 7-12, wherein the outer surface of the expansion insert defines a recess extending inwardly towards the insert opening and a projection extending outwardly from the insert opening, wherein the recess and projection are in axial alignment and the inner surface defines mating features.

Embodiment 7. The filter assembly of any one of embodiments 1-6 and 8-12, wherein the first cross-section of the perimetric sealing surface defines a first end, a second end, a first elongate side, and a second elongate side, and the first portion and the second portion are defined on the first elongate side.

Embodiment 8. The filter assembly of any one of embodiments 1-7 and 9-12, wherein the first portion of the perimetric sealing surface abuts the second portion of the perimetric sealing surface.

Embodiment 9. The filter assembly of any one of embodiments 1-8 and 10-12, wherein the endcap defines a plurality of first portions of the perimetric sealing surface and second portions of the perimetric sealing surface.

Embodiment 10. The filter assembly of any one of embodiments 1-9 and 11-12, wherein the first portions and second portions alternate.

Embodiment 11. The filter assembly of any one of embodiments 1-10 and 12, wherein the filter media is in a bag configuration.

Embodiment 12. The filter assembly of any one of embodiments 1-11, wherein the filter media is in a pleated configuration.

Embodiment 13. A tubesheet comprising:
a substantially planar sheet of material having a length and a width and defining a series of filter openings across the length and width of the sheet of material, wherein each of the filter openings in the series of filter openings extend through the sheet of material in an axial direction and have an oblong profile orthogonal to the axial direction, wherein the sheet of material defines a projection extending into each of the filter openings and a recess extending out from each of the filter openings, and wherein the projection and recess are axially aligned.

Embodiment 14. The tubesheet of any one of embodiments 13 and 15-20, wherein each of the filter openings defines a plurality of projections and a plurality of recesses in axial alignment, wherein the projections alternate with the recesses about a portion of each filter opening.

Embodiment 15. The tubesheet of any one of embodiments 13-14 and 16-20, wherein the plurality of projections and plurality of recesses form undulations extending along a curve.

Embodiment 16. The tubesheet of any one of embodiments 13-15 and 17-20, wherein the sheet of material comprises a sheet of metal.

Embodiment 17. The tubesheet of any one of embodiments 13-16 and 18-20, wherein a profile of each filter opening defines a first elongate side, a second elongate side, a first end and a second end, and the projection extends out from the filter opening from the first elongate side.

Embodiment 18. The tubesheet of any one of embodiments 13-17 and 19-20, wherein the recess extends into each filter opening on the second elongate side.

Embodiment 19. The tubesheet of any one of embodiments 13-18 and 20, wherein the profile of each filter opening is symmetrical.

Embodiment 20. The tubesheet of any one of embodiments 13-19, wherein a first filter opening defined in the tubesheet has a first longitudinal axis and a second filter opening defined in the tubesheet has a second longitudinal axis, and the first longitudinal axis and the second longitudinal axis are 10 degrees to 90 degrees apart.

Embodiment 21. A filtration system comprising:
a tubesheet comprising a substantially planar sheet of material having a length and a width, the sheet of material defining a filter opening;
a filter media having a first end, a second end, and defining a central media opening extending in an axial direction from the first end towards the second end;
an endcap coupled to the first end of the filter media, the endcap defining:
   an endcap opening in fluid communication with the central media opening,
   an inner surface abutting and surrounding the endcap opening, and
   a perimetric sealing surface about the endcap configured to mate with the tubesheet about the filter opening, wherein a first portion of the perimetric sealing surface projects inwardly towards the endcap opening and a second portion of the perimetric sealing surface projects outwardly from the endcap opening, wherein the first portion and the second portion are in axial alignment, and wherein the filter opening defines a corresponding outward projection configured to receive the second portion of the perimetric sealing surface and a corresponding inward projection configured to receive the first portion of the perimetric sealing surface.

Embodiment 22. The filtration system of any one of embodiments 21 and 23-37, further comprising an expansion insert defining an outer surface and an insert opening in fluid communication with the central media opening, wherein the outer surface of the expansion insert is configured to define a compression fit with the inner surface of the endcap, wherein the outer surface of the expansion insert defines a recess extending inwardly towards the insert opening and a projection extending outwardly from the insert opening, wherein the recess and projection are in axial alignment and the inner surface defines mating features.

Embodiment 23. The filtration system of any one of embodiments 21-22 and 24-37, wherein the perimetric sealing surface defines a first end, a second end, a first elongate side, and a second elongate side, and the first portion and the second portion are defined on the first elongate side.

Embodiment 24. The filtration system of any one of embodiments 21-23 and 25-37, wherein the first portion of the perimetric sealing surface abuts the second portion of the perimetric sealing surface.

Embodiment 25. The filtration system of any one of embodiments 21-24 and 26-37, wherein the endcap defines a plurality of first portions of the perimetric sealing surface and second portions of the perimetric sealing surface.

Embodiment 26. The filtration system of any one of embodiments 21-25 and 27-37, wherein the first portions and second portions alternate.

Embodiment 27. The filtration system of any one of embodiments 21-26 and 28-37, wherein the perimetric sealing surface forms an oblong loop in a first cross-section orthogonal to the axial direction.

Embodiment 28. The filtration system of any one of embodiments 21-27 and 29-37, wherein the endcap opening is oblong in a first cross-section.

Embodiment 29. The filtration system of any one of embodiments 21-28 and 30-37, wherein the central media opening is oblong in a second cross-section orthogonal to the axial direction.

Embodiment 30. The filtration system of any one of embodiments 21-29 and 31-37, wherein the expansion insert defines a tertiary flow channel in fluid communication with the central media opening.

Embodiment 31. The filtration system of any one of embodiments 21-30 and 32-37, wherein the filter opening extends through the tubesheet in the axial direction and the filter opening is oblong in a second cross-section orthogonal to the axial direction.

Embodiment 32. The filtration system of any one of embodiments 21-31 and 33-37, wherein the tubesheet defines a projection extending into the filter opening and a recess extending out from the filter opening, wherein the projection and recess are axially aligned.

Embodiment 33. The filtration system of any one of embodiments 21-32 and 34-37, wherein the tubesheet defines a plurality of projections and a plurality of recesses in axial alignment, wherein the projections alternate with the recesses about each filter opening.

Embodiment 34. The filtration system of any one of embodiments 21-33 and 35-37, wherein the plurality of projections and plurality of recesses form undulations extending along a curve.

Embodiment 35. The filtration system of any one of embodiments 21-34 and 36-37, wherein the sheet of material defines a series of filter openings across the length and width of the sheet of material.

Embodiment 36. The filtration system of any one of embodiments 21-35 and 37, wherein each of the filter openings in the series of filter openings have an oblong profile orthogonal to the axial direction.

Embodiment 37. The tubesheet of any one of embodiments 21-36, wherein the profile of each filter opening is symmetrical.

Embodiment 38. A filter assembly comprising:
filter media arranged about a central media opening, the filter media having a first end and a second end and the central media opening extends in an axial direction from the first end towards the second end;
an endcap coupled to the first end of the filter media, the endcap defining:
   an endcap opening in fluid communication with the central media opening,
   an inner surface abutting and surrounding the endcap opening, and
   a perimetric sealing surface about the endcap; and
   an expansion insert defining an outer surface and an insert opening, wherein the outer surface of the expansion insert is configured to define a compression fit with the inner surface of the endcap, wherein the outer surface of the expansion insert defines a recess extending inwardly towards the insert opening and a projection extending outwardly from the insert opening, wherein the recess and projection are in axial alignment and the inner surface defines mating features.

Embodiment 39. The filter assembly of any one of embodiments 38 and 40-44, wherein a first portion of the perimetric sealing surface projects inwardly towards the endcap opening and a second portion of the perimetric sealing surface projects outwardly from the endcap opening, wherein the first portion and the second portion are in axial alignment.

Embodiment 40. The filter assembly of any one of embodiments 38-39 and 41-44, wherein the first portion of the perimetric sealing surface abuts the second portion of the perimetric sealing surface.

Embodiment 41. The filter assembly of any one of embodiments 38-40 and 42-44, wherein the endcap defines a plurality of first portions of the perimetric sealing surface and second portions of the perimetric sealing surface.

Embodiment 42. The filter assembly of any one of embodiments 38-41 and 43-44, wherein the perimetric sealing surface forms an oblong loop in a first cross-section orthogonal to the axial direction.

Embodiment 43. The filter assembly of any one of embodiments 38-42 and 44, wherein the expansion insert defines a tertiary flow channel in fluid communication with the central media opening.

Embodiment 44. The filter assembly of any one of embodiments 38-43, wherein the first cross-section of the perimetric sealing surface defines a first end, a second end, a first elongate side, and a second elongate side, and the first portion and the second portion are defined on the first elongate side.

It should also be noted that, as used in this specification and the appended claims, the phrase "configured" describes a system, apparatus, or other structure that is constructed or configured to perform a particular task or adopt a particular configuration. The word "configured" can be used interchangeably with similar words such as "arranged", "constructed", "manufactured", and the like.

All publications and patent applications in this specification are indicative of the level of ordinary skill in the art to which this technology pertains. All publications and patent applications are herein incorporated by reference to the same extent as if each individual publication or patent application was specifically and individually indicated by reference. In the event that any inconsistency exists between the disclosure of the present application and the disclosure(s) of any document incorporated herein by reference, the disclosure of the present application shall govern.

This application is intended to cover adaptations or variations of the present subject matter. It is to be understood that the above description is intended to be illustrative, and not restrictive, and the claims are not limited to the illustrative embodiments as set forth herein.

## Claims

1. A filter assembly comprising:
filter media (110; 610) arranged about a central media opening (116), the filter media (110; 610) having a first end (112) and a second end (114) and the central media opening (116) extends in an axial direction from the first end (112) towards the second end (114); and
an endcap (130; 200; 300) coupled to the first end (112) of the filter media (110; 610), the endcap (130; 200; 300) defining:
an endcap opening (136; 230; 330) in fluid communication with the central media opening (116),
an inner surface (138; 638) abutting and surrounding the endcap opening (136; 230; 330),
a perimetric sealing surface (140; 220; 320) about the endcap (130; 200; 300),
wherein a first portion (142) of the perimetric sealing surface (140; 220; 320) projects inwardly towards the endcap opening, thereby forming a recess, (136; 230; 330) and a second portion (144) of the perimetric sealing surface (140; 220; 320) projects outwardly from the endcap opening (136; 230; 330), thereby forming a projection,
wherein the first portion (142) and the second portion (144) are in axial alignment,
wherein a depth between the projection and the recess is at least 5 mm, and
wherein the perimetric sealing surface (140; 220; 320) defines a first end (143), a second end (145), a first elongate side (147), and a second elongate side (149), and the first portion and the second portion are defined on the first elongate side.

2. The filter assembly of claim 1, wherein the perimetric sealing surface (140; 220; 320) has a depth in the axial direction, and wherein the depth of the perimetric sealing surface (140; 220; 320) is from 3 mm to 30 mm.

3. The filter assembly of any one of claims 1 and 2, wherein the perimetric sealing surface (140; 220; 320) forms an oblong loop in a first cross-section orthogonal to the axial direction.

4. The filter assembly of any one of claims 1-3, wherein the endcap opening (136; 230; 330) is oblong in a first cross-section orthogonal to the axial direction.

5. The filter assembly of any one of claims 1-4, wherein the central media opening (116) is oblong in a second cross-section orthogonal to the axial direction.

6. The filter assembly of any one of claims 1-5, further comprising an expansion insert (700) defining an outer surface (720) and an insert opening (710), wherein the outer surface (720) of the expansion insert (700) is configured to define a compression fit with the inner surface (138; 638) of the endcap (130; 200; 300).

7. The filter assembly of claim 6, wherein the expansion insert (700) defines a tertiary flow channel in fluid communication with the central media opening (116).

8. The filter assembly of any one of claims 6 and 7, wherein the outer surface (720) of the expansion insert (700) defines a recess (724) extending inwardly towards the insert opening (710) and a projection (722) extending outwardly from the insert opening (710), wherein the recess (724) and projection (722) are in axial alignment and the inner surface (138; 638) defines mating features.

9. The filter assembly of any one of claims 1-8, wherein the filter media is in a bag configuration or a pleated configuration.

10. The filter assembly of any one of claims 1-9, wherein the first portion (142) of the perimetric sealing surface (140; 220; 320) abuts the second portion (144) of the perimetric sealing surface (140; 220; 320).

11. The filter assembly of any one of claims 1-10, wherein the endcap (130; 200; 300) defines a plurality of first portions (142) and second portions (144); and wherein the first portions (142) and second portions (144) alternate.

12. A filtration system comprising:
a tubesheet (410; 510) comprising a substantially planar sheet of material having a length and a width, the sheet of material defining a filter opening (420; 520); and
the filter assembly of any one of claims 1-11,
wherein the filter opening (420; 520) defines a corresponding outward projection configured to receive the second portion of the perimetric sealing surface (140; 220; 320) and a corresponding inward projection configured to receive the first portion of the perimetric sealing surface (140; 220; 320).

13. The filtration system of claim 12, wherein the filter opening (420; 520) extends through the tubesheet (410; 510) in the axial direction, and wherein the filter opening (420; 520) is oblong in a second cross-section orthogonal to the axial direction.

14. The filtration system of any one of claims 12 and 13, wherein the tubesheet (410; 510) defines a projection (422) extending into the filter opening (420; 520) and a recess (424) extending out from the filter opening (420; 520), wherein the projection (422) and recess (424) are axially aligned.

15. Use of a filter assembly according to any one of claims 1-11 with a tubesheet (410; 510) comprising a substantially planar sheet of material having a length and a width, the sheet of material defining:
a filter opening (420; 520),
an outward projection, and
an inward projection,
wherein the first portion (142) of the perimetric sealing surface (140; 220; 320) is received in the inward projection of the tubesheet (410; 510), and wherein the second portion (144) of the perimetric sealing surface (140; 220; 320) is received in the outward projection of the tubesheet (410; 510).
